# EUROPEAN PATENT SPECIFICATION

(11) **EP 1 439 725 B1**
(45) Date of publication and mention of the grant of the patent: **02.08.2006**
(21) Application number: 03000890.8
(22) Date of filing: 16.01.2003
(51) Int. Cl.: H04Q 7/38

(54) **Handover of video telephony session with degraded quality**
Weiterreichen einer Videotelefoniesitzung mit verminderter Qualität
Transfert d'une session vidéotéléphonique ayant une qualité dégradée

(43) Date of publication of application: 21.07.2004
(73) Proprietor: Sony Ericsson Mobile Communications AB, 221 88 Lund (SE)
(72) Inventor: Farzannejad, Ali, 194 77 Stockholm (SE)
(74) Representative: Dahnér, Christer

(56) References cited:
- EP-A- 1 024 676
- EP-A- 1 263 254
- US-B1- 6 408 172
- ETSI: "Handover Requirements between UMTS and GSM or other Radio Systems (3G TS 22.129 version 3.2.0)" EUROPEAN TELECOMMUNICATION STANDARD, XX, XX, December 1999 (1999-12), pages 1-20, XP002143722

## Description

### TECHNICAL FIELD OF THE INVENTION

The present invention generally relates to the use of enhanced functions in cellular telephony and more particularly to a method, network and portable communication device for transferring a session from a link over a first network to a second link, where the second link supports a lower content of information than the first link.

### DESCRIPTION OF RELATED ART

With the development of wireless or cellular networks supporting the transfer of more content between a cellular phone and another device, which other device can also be a cellular phone, like for instance third generation cellular networks like WCDMA, It Is now possible to have enhanced services like video telephony, which is not possible in for instance some second generation cellular networks like GSM.

These cellular networks are provided with base stations, with which a phone is in contact. In case contact is lost with a base station, perhaps because the phone is moving, it is normal practice to hand over the call to another base station with which the phone has a better contact or to another channel on the base station.

Many such third generation networks are now in the process of being built, but at the early stages of such third generation network the coverage is not quite up to the same standard that old networks of the second generation are. For some locations there might therefore exist coverage of a phone In a GSM network, whereas there is no such coverage in a WCDMA network essentially provided in the same area.

EP 1 024 676 describes handover in relation to a third generation cellular network. The third generation cellular network allows n parallel communications over n parallel links. Examples of such sessions are telephone calls, faxes, downloading of data, interactive news delivery, interactive e-mail, video conferencing and web browsing. When handover is performed in relation to this network n-m communications are released.

When a user is involved in an enhanced service, like a video phone session, the phone might loose contact with the base station of the WCDMA network or be denied service because of a traffic overload in the network. The normal practise in these cases is that the session or video phone call is lost, even though there might exist a second generation wireless network like a GSM network in the vicinity. This might be highly irritating for a user.

A user can also have little power left in the battery of the phone, which energy is drained faster when a more complex session is at hand like video telephony, than a more simple session like an ordinary phone call. In these cases the phone might go "dead" because the energy is lost before the video phone call is ended. Also this is highly irritating to a user.

There Is thus a need for providing a way of continuing an enhanced session like video telephony although there is a low performance circumstance prevailing, without having to prematurely end the session.

### SUMMARY OF THE INVENTION

The present invention is therefore directed towards solving the problem of providing a continued service of a device involved In a video telephone session, although there Is a low performance circumstance prevailing.

This problem is generally solved by handing over the communication for the session from a first to a second link, which second link only supports a lower level of information content than the first link.

One object of the present invention is thus to provide a method which provides continued service of a device involved in an enhanced information content session, although there is a low performance circumstance prevailing.

According to a first aspect of the present invention, this object is achieved by a method of transferring a session ongoing between a first and a second device having a high level of information content from a first link of a first network to a second link, including the steps of:
detecting a low performance circumstance for the session over the first link to the first wireless network,
handing over communication for the session to a second link using a lower level of information content in the session, such that communication can be continued over the second link with a lower level of information content than over the first link despite the low performance circumstance.

A second aspect of the present invention includes the features of the first aspect, wherein the second link is provided via a second wireless network, which only supports a lower level of information content than the first network.

A third aspect of the present invention includes the features of the first aspect, further including the step of notifying at least the user of the first device of the handover to the second link.

A fourth aspect of the present invention includes the features of the third aspect, wherein the step of handing over is performed only if the user of the first device confirms the notification. By doing this the user can control the operation so that he can decide to end the session instead if he so wishes.

A fifth aspect of the present invention includes the features of the first aspect, wherein the low performance circumstance is bad coverage in the first network regarding at least the first device.

A sixth aspect of the present invention includes the features of the first aspect, wherein the low performance circumstance is traffic overload in the first network.

A seventh aspect of the present invention includes the features of the first aspect, wherein the low performance circumstance is low battery power of the first device.

An eighth aspect of the present invention includes the features of the first aspect, further including the steps of:
detecting a high performance situation for a link of the first network, and
handing over communication for the session to said link.

This aspect has the advantage of returning the session back into full force, when the low performance circumstance has been relieved.

A ninth aspect of the present invention includes the features of the eighth aspect, wherein the high performance situation is good coverage in the first network regarding at least the first device.

A tenth aspect of the present invention includes the features of the first aspect, wherein the high performance circumstance is enough available bandwidth in the first network.

An eleventh aspect of the present invention includes the features of the first aspect, wherein the first network is a third generation cellular network.

A twelfth aspect of the present invention includes the features of the second aspect, wherein the second network is an enhanced second-generation cellular network.

A thirteenth aspect of the present invention includes the features of the twelfth aspect, wherein the session is a video telephone session continued in the enhanced second-generation cellular network at a lower quality.

A fourteenth aspect of the present invention includes the features of the second aspect, wherein the second network is an ordinary second-generation cellular network.

A fifteenth aspect of the present invention includes the features of the fourteenth aspect, wherein the session is a video telephone session continuing only with sound in the ordinary second-generation cellular network.

Another object of the present invention is directed towards providing a wireless network, which allows the continued service of a device involved in an enhanced information content session via the network, although there is a low performance circumstance prevailing.

According to an sixteenth aspect of the present invention, this object is achieved by a wireless network supporting sessions of a high level of information content between at least two devices, comprising:
at least one base station for communication with a first device in a session having a high level of information content over a first link, and
a control unit arranged to:
   order handover of the session for communication over a second link using a lower level of information content in the session in dependence of the detection of a low performance circumstance for the session over the first link, such that communication can be continued over the second link with a lower level of information content than over the first link despite the low performance circumstance.

A seventeenth aspect of the present invention includes the features of the sixteenth aspect, wherein the second link is provided in a second network only supporting sessions having a lower level of information content than the first network.

An eighteenth aspect of the present invention includes the features of the sixteenth aspect, wherein the base station is arranged to detect the low performance circumstance for the first device and report this to the control unit.

A nineteenth aspect of the present invention includes the features of the sixteenth aspect, wherein the base station is arranged to receive a request for handover from the first device, which has detected the low performance circumstance.

A twentieth aspect of the present invention includes the features of the sixteenth aspect, wherein a base station is arranged to detect a high performance situation for the first device and report this to the control unit and the control unit is further arranged to order handover of the session from the second link to another link via a base station based on the detected high performance situation.

Another object of the present invention is to provide a portable communication device, which provides for continued service of the device when involved in an enhanced information content session although there is a low performance circumstance prevailing.

According to a twenty-first aspect of the present invention, this object is achieved by a portable communication device able to communicate with other devices via at least a first network supporting sessions having a high level of information content:
a radio unit arranged to communicate with the first network over a first link in a session having a high level of information content,
a performance circumstance detector detecting a low performance circumstance for the session, and
a control unit arranged to request handover of the session from the first link to a second link using a lower level of information content in the session, such that the session can be continued over the second link with a lower level of information content than over the first link despite the low performance circumstance.

A twenty-second aspect of the present invention includes the features of the twenty-first aspect, wherein the second link is provided over a second wireless network only supporting sessions having a lower level of information content.

A twenty-third aspect of the present invention includes the features of the twenty-first aspect, further including a notifying unit and wherein the control unit is further arranged to present information via the notifying unit informing a user of the handover.

A twenty-fourth aspect of the present invention includes the features of the twenty-first aspect, further including an input unit, wherein the control unit is arranged to await a confirmation from the user via the input unit before requesting handover.

A twenty-fifth aspect of the present invention includes the features of the twenty-first aspect, wherein the performance circumstance detector detects bad coverage of the first link and is provided in the radio unit.

A twenty-sixth aspect of the present invention includes the features of the twenty-fifth aspect, wherein the performance circumstance detector also detects a high performance situation for a link of the first network and the control unit is further arranged to request handover to this link upon detection of the high performance situation.

A twenty-seventh aspect of the present invention includes the features of the twenty-first aspect, further including a battery and the performance circumstance detector is arranged to sense low battery power and report this to the control unit.

The present invention has the advantage of allowing sessions to continue in limited form which sessions might otherwise be lost, or where otherwise a new connection has to be established for the session.

With the expression high level of information content is meant that a lot of information can be transmitted in a session like video information. By low performance circumstance is meant a circumstance hindering the full usage of the information content in a session. This can for example be traffic overload in the network, bad coverage of the network or a low energy level in a device communicating via the network. By a high performance situation is meant a situation where the low performance circumstance no longer applies, for example that the first network has good coverage and available bandwidth or the first device has enough power again.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The present invention will now be described in more detail in relation to the enclosed drawings, in which:
fig. 1 schematically shows two cellular phones communicating with each other via a first and a second network,
fig. 2 schematically shows a top view of a phone according to the invention,
fig. 3 shows a block schematic of the relevant parts of the phone according to a first embodiment of the invention,
fig. 4 shows a block schematic of the relevant parts of the phone according to a second embodiment of the invention.
fig. 5 shows a flow chart of a method according to the first embodiment of the invention, and
fig. 6 shows a flow chart for performing a method according to the second embodiment of the invention.

### DETAILED DESCRIPTION OF EMBODIMENTS

The present invention relates to transfer of a session having a high level of information content from a first network to a second network with limited content but without losing the whole session. A portable electronic device according to the invention will in the following be described in relation to a cellular phone in a cellular network. This is just one example of a device according to the invention. It can also be a portable electronic device such as a lap top computer, a palm top computer, an electronic organizer, a smartphone or a communicator, as long as they can be connected to a cellular network. This can in the case of a lap top computer take place by using a PC-card or a similar device connected to the computer for communication with the cellular network.

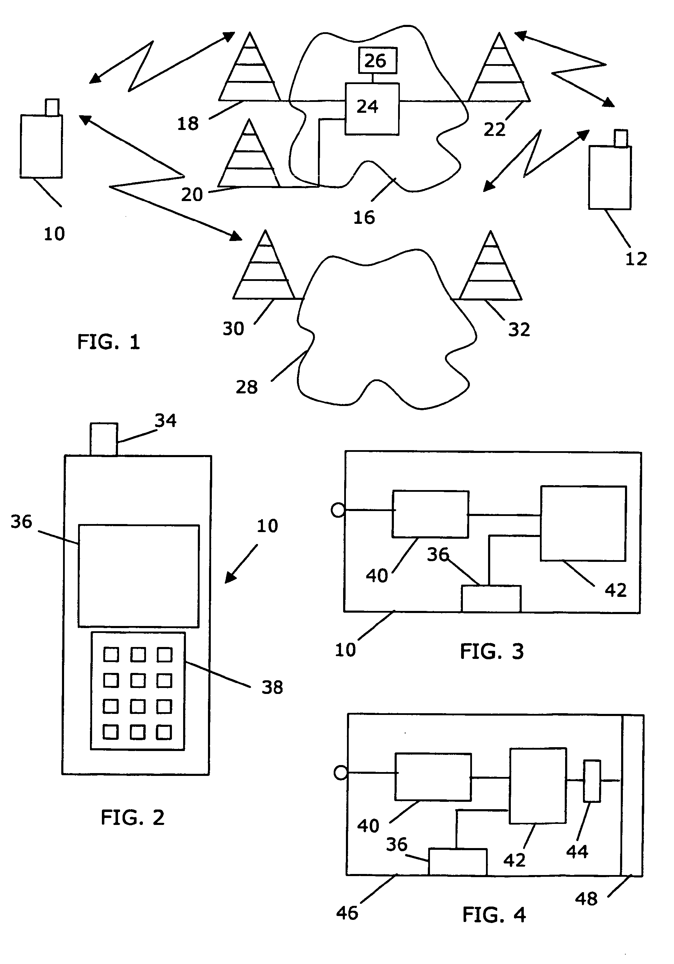

Fig. 1 schematically shows a first portable communication device according to the invention in the form of a cellular phone 10. The phone 10 communicates with a second device 12 in the form of a second cellular phone via a first network 16, which is a third generation wireless network and in the present case a wideband CDMA (Code Division Multiple Access) Network. The first network 16 includes a first base station 18, with which the first phone 10 is in contact, a second base station 22, with which the second phone 12 is in contact and a third base station 20. The first network also includes a switch 24 interconnecting the first and second base stations 18 and 20 for allowing the first and second phones 10 and 12 to communicate with each other. Also the third base station 20 is connected to the switch 24. There is furthermore a second network 28, with which the first phone 10 is in contact via a fourth base station 30 and with which the second phone 12 is in contact via a fifth base station 32. The second network 28 is here a standard second-generation cellular network in the form of a GSM network. It should be realised that the shown first network is a very simplified network for providing better understanding of the invention. Normally there can be several more switches and several more base stations in a network. The control unit is furthermore normally provided in the form of a network control function of the network operator including billing functions and a home location register for the network, allowing forwarding of control information to the switch or switches actually handling the connection. It should furthermore be realised that as an alternative the second phone 12 does not have to be a cellular phone, but can be a device in another network, possibly fixed, with which the first phone 10 may get in contact.

Fig. 2 shows a phone 10 according to the invention. The phone 10 includes a display 36 where information may be shown to a user, a keypad 16 from which the user can accept requests from the phone and an antenna 34 protruding from the body of the phone, which is used for communication with the first base station. It should be realised that the antenna can, as an alternative, be in-built.

Fig. 3 shows a block schematic of the relevant parts of the first phone 10 according to a first embodiment of the present invention. The phone 10 indudes a radio unit 40 connected to the antenna (not shown). The radio unit 40 also includes a performance circumstance detector in the form of a signal strength detector. The radio unit 40 is connected to a control unit 42. The control unit 42 is also connected to the display 36. As an alternative the signal strength detector can be provided as a separate unit.

Fig. 4 shows a block schematic of a second embodiment of the phone 10 according to a second embodiment the invention. The phone 10 includes a radio unit 40 connected to the antenna (not shown). The radio unit is connected to a control unit 42. The control unit 42 is connected to the display 36 as well as to a performance circumstance detector 44 in the form of an energy level detector. The performance circumstance detector 44 is connected to the battery 48 of the phone 10.

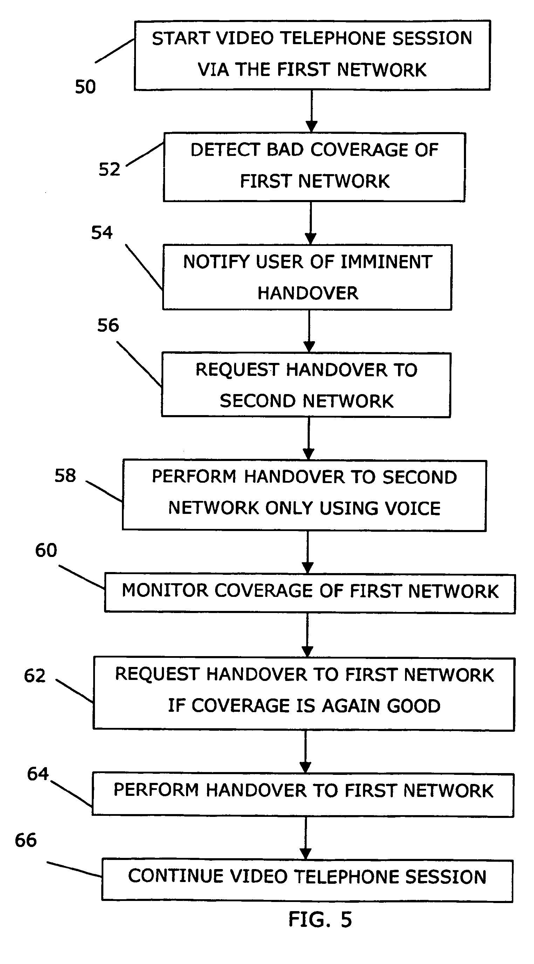

The way the present invention operates according to a first embodiment of the invention will now be described with reference to fig. 1, 2 and 3 and with further reference to fig. 5, which shows a flow chart of the first embodiment of the method according to the invention. First a session having a high level of information content in the form a video telephone session is set up on a first link between the first and second phones 10 and 12 via the first network 16, which supports such facilities, step 50. The contact or link between the first phone 10 and the second phone 12 is here provided via the first base station 18, the switch 24 and the second base station 22. During this session the radio unit 40 of the phone continuously monitors the signal strength signal of the base station 18. During this session this signal falls below a certain lowest threshold and thus a bad coverage of the first network is detected, step 52. This can be because the first phone 10 leaves the coverage area of the first base station 18. It can also be because an object blocks radio communication with the first base station 18, which degrades the reception of radio signals. It is furthermore possible that an object is moved between the phone and the base station such that signals cannot be received properly. The third base station 20 is in this case not close enough to the phone for being able to pick up signals from the first phone 10. The radio unit 40 signals this fact to the phone control unit 42. The signal strength detector at the same time receives strong signals from the fourth base station 30 of the second network 28, which in this example is an older system covering a larger area than the first network 16. The phone control unit 42 notifies the user of the fact that contact is bad and that video information will be lost, via the display 36, step 54, and then the phone control unit 42 requests a handover to the second network 28, step 56. The request is received by the first base station 18 and then forwarded to the network control unit 26 via the switch 24. The first network control unit 26 then contacts a corresponding control unit of the second network and requests a handover to a second link in that network. A second link is set up between the two phones via the fourth and fifth base stations 30 an of the second network 28. Then the session is transferred to the second link where only voice can be transferred, step 58. Thereafter the session continues on the second link only using voice with the video information being lost. There is thus a lower level of information content in the session after the handover. The radio unit of the first phone 10 continues to monitor the signal strength of base stations of the first network 16, step 60. The user of the first phone 10 now moves to an area where the third base station 20 is provided. The radio unit 40 signals the fact that a strong enough signal has been received from that base station 20 to the phone control unit 42, which then requests handover from the second to the first network because the coverage is again good, step 62. This request is in this embodiment sent to the control unit of the second network, but could equally as well have been sent to the control unit 42 of the first network if some other reason than bad coverage was the cause of the handover. A third link is then set up between the first and second phones in the first network and thereafter the session is transferred back to the first network, step 64, and the video telephone session is continued as before, step 66.

The above-described method can be varied in many ways. First of all it is possible that the phone would move back into contact with the first base station, in which case the session would return to a link provided via the first base station. Second of all it is possible that the signal strength measurements deciding a handover would be placed in the first base station 18, which would forward information for making a decision of handover to the first network control unit 26. The notification of signal strength could be initiated by the network control unit. The monitoring of signal strength after the handover could then also be made by the first base station and neighbouring base stations in order to find out if the first phone would again come into contact with the first network. The first network control unit 26 would then request a return of the session from the second network 28 when the signal was strong enough. The phone 10 could furthermore be arranged to store the last used picture of the video session as a still picture to be used when no video session is possible in order to give the user a chance to see something from the session. The handover could as an alternative be requested only upon confirmation by the user of the first device. In this way a user can decide to terminate the session instead of handing over to the second network.

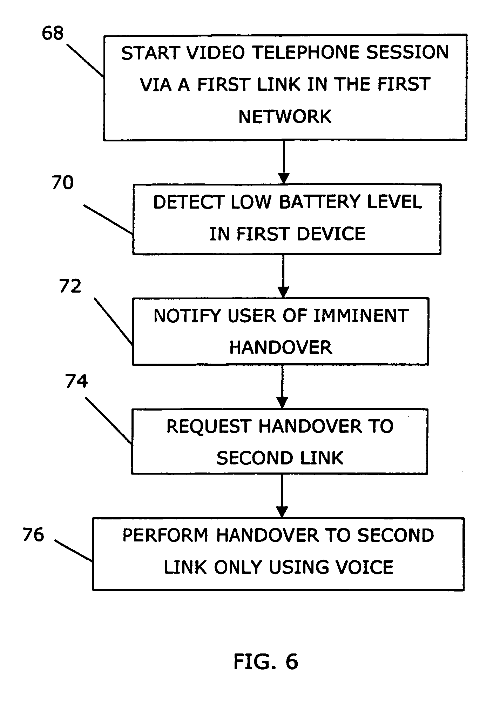

Now a second embodiment of the present invention will be described with reference being made to fig. 1, 2, 4 and 6, where the latter shows a flow chart of a method according to a second embodiment of the invention. The phone control unit 42 here has a battery energy sensor 44, which senses the energy level of the battery 48. First a video telephone session is started in the same ways in the first embodiment, step 68. The battery sensor 44 then detects a low energy level of the battery, step 70, and signals this to the phone control unit 42. The phone control unit 42 notifies the user in the already described manner, step 72, and then requests a handover to a second link having a lower level of information content, step 74. This is done in order to save energy and enable the session to go on a bit longer than it would otherwise be allowed to. The first network 16 then hands over the session to another link having lower capacity, step 76. Note that in this embodiment, the second link can as previously described be provided via the second network 28 having a better coverage. The handover can here also be a soft handover to another channel or link via the same network 16 and perhaps via the same base station 18, however only using a smaller bandwidth. This allows the phone to turn off for instance the display and a video generator in order to save energy.

The above described method could be varied in that the phone would be brought back to normal operation if the energy level of the phone is again satisfactory. This can for instance take place if the phone is connected to a charger. Then the battery sensor would report this situation to the phone control unit for handover to a link allowing high content in the session.

There are further variations that can be made to the present invention. The notification about imminent handover can be sent also to the second phone such that user is also aware of the fact that the video link will be lost. The change to a lower level of information content can also take place because there is much traffic in the first network, in order for the first network to be able to handle all the traffic. The detection of a low performance circumstance could then as an alternative be provided in the switch or the control unit of the first network. Also in this case it is possible to use a soft handover, as well as to use notification of an imminent handover to the second phone. The session can also later be handed over to a link having a higher capacity, when there is later enough bandwidth available for the high level of information content

Another variation of the present invention is that the second network can be an enhanced second-generation cellular network like a GPRS or EDGE network. In that case the video session can be transferred without a complete loss of the video information, such that degraded video information is received by the two phones.

Yet another variation of the invention is that both the second and first embodiments of the invention can be provided simultaneously. There can furthermore be any combination of handover because of bad coverage, traffic overload or low battery level provided at the same time.

The present invention is furthermore not limited to video information, but is applicable to any type of session where added content can be reduced to lower content for reducing the bandwidth of the session.

The radio unit is in the case of a cellular phone provided in the form of the actual radio receiver. In case the device is a laptop or other similar device communicating with a radio network via a PC card, the radio unit is placed in that device instead.

The present invention thus allows a session having a high level of information content to continue with lower quality when the circumstances around the session do not allow full capacity in the session. In this way the session does not have to be terminated, but can continue in a limited way. If this were not the case the session would have to be ended completely.

For these and other reasons the present invention is only to be limited by the following claims.

## Claims

1. Method of transferring a video telephone session having a high level of information content ongoing between a first (10) and a second (12) device from a first link over a first network (16) to a second link, including the step of:
detecting a low performance circumstance for the video telephone session over the first link to the first wireless network, (steps 52; 70),
**characterised by** the further step of
handing over communication for the session to a second link using a lower level of information content In the session, (steps 58; 76), such that communication can be continued over the second link with a lower level of information content than over the first link despite the low performance circumstance.

2. Method according to claim 1, wherein the second link is provided via a second wireless network (28), which only supports a lower level of information content than the first network.

3. Method according to claim 1 or 2, further including the step of notifying at least the user of the first device (10) of the handover to the second link, (steps 54; 72).

4. Method according to claim 3, wherein the step of handing over is performed only if the user of the first device confirms the notification.

5. Method according to any previous claim, wherein the low performance circumstance is bad coverage in the first network regarding at least the first device.

6. Method according to any of claims 1 - 4, wherein the low performance circumstance is traffic overload in the first network.

7. Method according to any of claims 1 - 4, wherein the low performance circumstance is low battery power of the first device.

8. Method according to any previous claim, further including the steps of:
detecting a high performance situation for a link of the first network, and
handing over communication for the session to said link, (step 62).

9. Method according to claim 8, wherein the high performance situation is good coverage in the first network regarding at least the first device.

10. Method according to claim 8, wherein the high performance situation is enough available bandwidth in the first network.

11. Method according to any previous claim, wherein the first network is a third generation cellular network.

12. Method according to claim 2, wherein the second network is an enhanced cellular second generation network.

13. Method according to claim 12, wherein the video telephone session is continued in the enhanced cellular second generation network at a lower quality.

14. Method according to claim 2, wherein the second network is an ordinary cellular second generation network.

15. Method according to claim 14, wherein the video telephone session is continued with sound only in the ordinary cellular second generation network.

16. Wireless network (16) supporting sessions having a high level of information content between at least two devices (10, 12), comprising
at least one base station (18, 20) for communication with a first device (10) in a video telephone session over a first link,
**characterised by** a control unit (24) arranged to:
order handover of the session for communication over a second link using a lower level of information content in the session in dependence of the detection of a low performance circumstance for the session over the first link, such that communication can be continued over the second link with a lower level of information content than over the first link despite the low performance circumstance.

17. Wireless network according to claim 16, wherein the second link is provided in a second network (28) only supporting sessions having a lower level of information content than the first network (16).

18. Network according to claim 16 or 17, wherein the base station (18) is arranged to detect the low performance circumstance for the first device (10) and report this to the control unit (26).

19. Network according to claim 16 or 17, wherein the base station is arranged to receive a request for handover from the first device, which has detected the low performance circumstance.

20. Network according to any of claims 17 or 19, wherein a base station (20) is arranged to detect a high performance situation for the first device and report this to the control unit (26) and the control unit is further arranged to order handover of the session from the second link to another link via a base station based on the detected high performance situation.

21. Portable communication device (10) able to communicate with other devices via at least a first network (16) supporting sessions having a high level of information content:
a radio unit (40) arranged to communicate with the first network over a first link in a video telephone session having a high level of information content, and
a performance circumstance detector (40; 44) detecting a low performance circumstance for the session,
**characterised by** a control unit (42) arranged to request handover of the session from the first link to a second link using a lower level of information content in the session, such that the session can be continued over the second link with a lower level of information content than over the first link despite the low performance circumstance.

22. Portable communication device (10) according to claim 21, wherein the second link is provided over a second wireless network (28) only supporting sessions having a lower level of information content.

23. Portable communication device (10) according to claim 21 or 22, further including a notifying unit (36) and wherein the control unit (42) is further arranged to present information via the notifying unit informing a user of the handover.

24. Portable communication device according to claim 23, further including an input unit (38), wherein the control unit (42) is arranged to await a confirmation from the user via the input unit before requesting handover.

25. Portable communication device (10) according to any of claims 21 - 24, wherein the performance circumstance detector (40) detects bad coverage of the first link and is provided in the radio unit.

26. Portable communication device (10) according to any of claims 21 - 25, wherein the performance circumstance detector also detects a high performance situation for a link over the first network and the control unit (42) is further arranged to request handover to this link upon detection of the high performance situation.

27. Portable communication device according to any of claims 21 - 25, further including a battery (48) and the performance circumstance detector (44) is arranged to sense low battery power and report this to the control unit.

## Patentansprüche

1. Verfahren zum Übertragen einer Videotelefon-Sitzung mit einem hohen Grad eines Informationsgehalts, die zwischen einer ersten (10) und einer zweiten (12) Vorrichtung von einer ersten Verbindung über ein erstes Netzwerk (16) zu einer zweiten Verbindung stattfindet, mit den Schritten:
Detektieren eines Umstands niedriger Leistungsfähigkeit der Videotelefon-Sitzung über die erste Verbindung zu dem ersten Drahtlos-Netzwerk, (Schritte 52; 70),
**gekennzeichnet durch** den weiteren Schritt
des Übergebens der Kommunikation für die Sitzung an eine zweite Verbindung, die einen niedrigeren Grad eines Informationsgehalts in der Sitzung verwendet (Schritte 58; 76), so dass trotz des Umstands niedriger Leistungsfähigkeit die Kommunikation über die zweite Verbindung mit einem Grad eines Informationsgehalts, der niedriger ist als der Grad des Informationsgehalts über die erste Verbindung, fortgesetzt werden kann.

2. Verfahren nach Anspruch 1, wobei die zweite Verbindung über ein zweites Drahtlos-Netzwerk (28) vorgesehen ist, das nur einen Grad eines Informationsgehalts unterstützt, der niedriger ist als der Grad des Informationsgehalts des ersten Netzwerkes.

3. Verfahren nach Anspruch 1 oder 2, das weiterhin den Schritt des Benachrichtigen mindestens des Benutzers der ersten Vorrichtung (10) über das Übergeben an die zweite Verbindung (Schritte 54; 72) umfasst.

4. Verfahren nach Anspruch 3, wobei der Schritt des Übergebens nur durchgeführt wird, wenn der Benutzer der ersten Vorrichtung die Benachrichtigung bestätigt.

5. Verfahren nach einem der vorangehenden Ansprüche, wobei der Umstand niedriger Leistungsfähigkeit die schlechte Funkabdeckung in dem ersten Netzwerk bezüglich mindestens der ersten Vorrichtung ist.

6. Verfahren nach einem der Ansprüche 1 bis 4, wobei der Umstand niedriger Leistungsfähigkeit eine Überlast des Datenverkehrs in dem ersten Netzwerk ist.

7. Verfahren nach einem der Ansprüche 1 bis 4, wobei der Umstand niedriger Leistungsfähigkeit eine geringe Batterieleistung der ersten Vorrichtung ist.

8. Verfahren nach einem der vorangehenden Ansprüche, das die weiteren Schritte umfasst:
Detektieren eines Zustands hoher Leistungsfähigkeit für eine Verbindung des ersten Netzwerkes und
Übergeben der Kommunikation für die Sitzung an die Verbindung (Schritt 62).

9. Verfahren nach Anspruch 8, wobei der Zustand hoher Leistungsfähigkeit eine gute Funkabdeckung in dem ersten Netzwerk bezüglich zumindest der ersten Vorrichtung ist.

10. Verfahren nach Anspruch 8, wobei der Zustand hoher Leistungsfähigkeit einer ausreichend verfügbaren Bandbreite in dem ersten Netzwerk entspricht.

11. Verfahren nach einem der vorangehenden Ansprüche, wobei das erste Netzwerk ein Mobilfunknetzwerk der dritten Generation ist.

12. Verfahren nach Anspruch 2, wobei das zweite Netzwerk ein erweitertes Mobilfunknetzwerk der zweiten Generation ist.

13. Verfahren nach Anspruch 12, wobei die Videotelefon-Sitzung in dem erweiterten Mobilfunknetzwerk der zweiten Generation mit einer niedrigeren Qualität fortgesetzt wird.

14. Verfahren nach Anspruch 2, wobei das zweite Netzwerk ein gewöhnliches Mobilfunknetzwerk der zweiten Generation ist.

15. Verfahren nach Anspruch 14, wobei die Videotelefon-Sitzung nur mit Ton im gewöhnlichen Mobilfunknetzwerk der zweiten Generation fortgesetzt wird.

16. Drahtlos-Netzwerk (16), das Sitzungen mit einem hohem Grad eines Informationsgehaltes zwischen mindestens zwei Vorrichtungen (10, 12) unterstützt, umfassend:
mindestens eine Basisstation (18, 20) zur Kommunikation mit einer ersten Vorrichtung (10) in einer Videotelefon-Sitzung über eine erste Verbindung,
**gekennzeichnet durch** eine Steuereinheit (24), die gestaltet ist,
um ein Übergeben der Sitzung für die Kommunikation über eine zweite Verbindung mit einem niedrigeren Grad eines Informationsgehalts in der Sitzung abhängig von der Detektion eines Umstands niedriger Leistungsfähigkeit für die Sitzung über die erste Verbindung anzuweisen, so dass trotz des Umstands der niedrigen Leistungsfähigkeit die Kommunikation über die zweite Verbindung mit einem Grad eines Informationsgehalts, der niedriger ist als der Grad des Informationsgehalts über die erste Verbindung, fortgesetzt werden kann.

17. Drahtlos-Netzwerk gemäß Anspruch 16, wobei die zweite Verbindung in einem zweiten Netzwerk (28) vorgesehen ist, das nur Sitzungen mit einem Grad eines Informationsgehalts unterstützt, der niedriger ist als der Grad des Informationsgehalts über das erste Netzwerk (16).

18. Netzwerk gemäß Anspruch 16 oder 17, wobei die Basisstation (18) ausgestaltet ist, um den Umstand niedriger Leistungsfähigkeit für die erste Vorrichtung (10) zu detektieren und diesen der Steuereinheit (26) mitzuteilen.

19. Netzwerk gemäß Anspruch 16 oder 17, wobei die Basisstation ausgestaltet ist, um eine Anfrage zur Übergabe von der ersten Vorrichtung zu empfangen, die den Umstand niedriger Leistungsfähigkeit detektiert hat.

20. Netzwerk gemäß einem der Ansprüche 17 oder 19, wobei eine Basisstation (20) ausgestaltet ist, um einen Zustand für hohe Leistungsfähigkeit für die erste Vorrichtung zu detektieren und diese der Steuereinheit (26) mitzuteilen, und wobei die Steuereinheit weiterhin ausgestaltet ist, um ein Übergeben der Sitzung von der zweiten Verbindung zu einer weiteren Verbindung über eine Basisstation abhängig von dem detektierten Zustand hoher Leistungsfähigkeit anzuweisen.

21. Tragbare Kommunikationsvorrichtung (12), die in der Lage ist, mit anderen Vorrichtungen über zumindest ein erstes Netzwerk (16), das Sitzungen mit einem hohen Grad eines Informationsgehalts unterstützt, zu kommunizieren:
eine Funkeinheit (40), die ausgebildet ist, um mit dem ersten Netzwerk über eine erste Verbindung in einer Videotelefonsitzung mit einem hohen Grad eines Informationsgehaltes zu kommunizieren, und
einen Leistungszustandsdetektor (40; 44), der einen Umstand niedriger Leistungsfähigkeit für die Sitzung detektiert,
**gekennzeichnet durch** eine Steuereinheit (42), die ausgebildet ist, um ein Übergeben der Sitzung von der ersten Verbindung zu einer zweiten Verbindung, die einen niedrigeren Grad eines Informationsgehalts in der Sitzung verwendet, anzufragen, so dass trotz des Umstands niedriger Leistungsfähigkeit die Sitzung über die zweite Verbindung mit einem Grad eines Informationsgehalts, der niedriger ist als der Grad des Informationsgehalts über die erste Verbindung, fortgesetzt werden kann.

22. Tragbare Kommunikationsvorrichtung (10) gemäß Anspruch 21, wobei die zweite Verbindung über ein zweites Drahtlos-Netzwerk (28) bereitgestellt wird, das nur Sitzungen mit einem niedrigen Grad eines Informationsgehalts unterstützt.

23. Tragbare Kommunikationsvorrichtung (10) gemäß Anspruch 21 oder 22, die weiterhin eine Benachrichtigungseinheit (36) aufweist, und wobei die Steuereinheit (42) weiterhin ausgebildet ist, um eine Information über die Benachrichtigungseinheit bereitzustellen, die einen Benutzer von der Übergabe informiert.

24. Tragbare Kommunikationsvorrichtung gemäß Anspruch 23, die weiterhin eine Eingabeeinheit (38) umfasst, wobei die Steuereinheit (42) ausgebildet ist, um eine Bestätigung von dem Benutzer mit Hilfe der Eingabeeinheit vor dem Anfordern der Übergabe zu erwarten.

25. Tragbare Kommunikationsvorrichtung (10) gemäß einem der Ansprüche 21 bis 24, wobei der Leistungszustandsdetektor (40) schlechte Funkabdeckung der ersten Verbindung detektiert und in der Funkeinheit vorgesehen ist.

26. Tragbare Kommunikationsvorrichtung (10) gemäß einem der Ansprüche 21 bis 25, wobei der Leistungszustandsdetektor auch einen Zustand hoher Leistungsfähigkeit für eine Verbindung über das erste Netzwerk detektiert, und wobei die Steuereinheit (42) weiterhin ausgebildet ist, um eine Übergabe zu dieser Verbindung bei einer Detektion des Zustands hoher Leistungsfähigkeit anzufragen.

27. Tragbare Kommunikationsvorrichtung gemäß einem der Ansprüche 21 bis 25, die weiterhin eine Batterie (48) umfasst, und wobei der Leistungszustandsdetektor (44) ausgestaltet ist, um eine niedrige Batterieleistung zu detektieren und diese der Steuereinheit mitzuteilen.

## Revendications

1. Procédé de transfert d'une session vidéotéléphonique possédant un niveau élevé de contenu d'information, qui se déroule entre un premier (10) et un second (12) dispositifs, depuis une première liaison via un premier réseau (16) vers une seconde liaison, comprenant l'étape consistant à :
détecter une circonstance de faibles performances pour la session vidéotéléphonique sur la première liaison, vers le premier réseau sans fil, (étapes 52 ; 70),
**caractérisé en outre par** l'étape consistant à :
transférer la communication pour la session vers une seconde liaison, utilisant un niveau inférieur de contenu d'information dans la session (étapes 58 ; 76), afin que cette communication puisse se poursuivre sur la seconde liaison avec un niveau inférieur de contenu d'information que sur la première liaison, malgré la circonstance de faibles performances.

2. Procédé selon la revendication 1, dans lequel la seconde liaison est fournie via un second réseau sans fil (28) qui ne supporte qu'un niveau de contenu d'information inférieur à celui du premier réseau.

3. Procédé selon la revendication 1 ou 2, comprenant en outre l'étape consistant à notifier au moins à l'utilisateur du premier dispositif (10) le transfert vers la seconde liaison (étapes 54 ; 72).

4. Procédé selon la revendication 3, dans lequel l'étape de transfert n'est exécutée que si l'utilisateur du premier dispositif confirme la notification.

5. Procédé selon l'une quelconque des revendications précédentes, dans lequel la circonstance de faibles performances est une mauvaise couverture dans le premier réseau, concernant au moins le premier dispositif.

6. Procédé selon l'une quelconque des revendications 1 à 4, dans lequel la circonstance de faibles performances est une surcharge de trafic dans le premier réseau.

7. Procédé selon l'une quelconque des revendications 1 à 4, dans lequel la circonstance de faibles performances est un faible niveau de la batterie du premier dispositif.

8. Procédé selon l'une quelconque des revendications précédentes, comprenant en outre les étapes consistant à :
détecter une situation de performances élevées pour une liaison du premier réseau, et
transférer sur ladite liaison la communication pour la session (étape 62).

9. Procédé selon la revendication 8, dans lequel la situation de performances élevées est une bonne couverture dans le premier réseau concernant au moins le premier dispositif.

10. Procédé selon la revendication 8, dans lequel la situation de performances élevées est une bande passante suffisante sur le premier réseau.

11. Procédé selon l'une quelconque des revendications précédentes, dans lequel le premier réseau est un réseau cellulaire de la troisième génération.

12. Procédé selon la revendication 2, dans lequel le second réseau est un réseau cellulaire amélioré de la deuxième génération.

13. Procédé selon la revendication 12, dans lequel la session vidéotéléphonique est poursuivie avec une qualité inférieure sur le réseau cellulaire amélioré de la deuxième génération.

14. Procédé selon la revendication 2, dans lequel le second réseau est un réseau cellulaire ordinaire de la deuxième génération.

15. Procédé selon la revendication 14, dans lequel la session vidéotéléphonique se poursuit avec le son seulement sur le réseau cellulaire ordinaire de la deuxième génération.

16. Réseau sans fil (16) supportant des sessions ayant un niveau élevé de contenu d'information entre au moins deux dispositifs (10, 12), comprenant :
au moins une station de base (18, 20) destinée à communiquer avec un premier dispositif (10) dans une session vidéotéléphonique sur une première liaison,
**caractérisé par** une unité de commande (24) agencée afin d' :
ordonner le transfert de la session de communication à une seconde liaison, utilisant un niveau inférieur de contenu d'information dans la session, en fonction de la détection d'une circonstance de faibles performances pour la session sur la première liaison, afin que cette communication puisse se poursuivre sur la seconde liaison avec un niveau inférieur de contenu d'information à celui sur la première liaison, malgré la circonstance de faibles performances.

17. Réseau sans fil selon la revendication 16, dans lequel la seconde liaison est fournie sur un second réseau (28) qui ne supporte que des sessions ayant un niveau de contenu d'information inférieur à celui du premier réseau (16).

18. Réseau selon la revendication 16 ou 17, dans lequel la station de base (18) est agencée pour détecter la circonstance de faibles performances pour le premier dispositif (10) et le rapporter à l'unité de commande (26).

19. Réseau selon la revendication 16 ou 17, dans lequel la station de base (18) est agencée pour recevoir une demande de transfert du premier dispositif, qui a détecté la circonstance de faibles performances.

20. Réseau selon l'une quelconque des revendications 17 ou 19, dans lequel une station de base (20) est agencée pour détecter une situation de performances élevées pour le premier dispositif et le rapporter à l'unité de commande (26) et dans lequel l'unité de commande est en outre agencée pour ordonner le transfert de la session de la deuxième liaison à une autre liaison via une station de base, sur la base de la situation détectée de performances élevées.

21. Dispositif portable de communication (10) en mesure de communiquer avec d'autres dispositifs sur au moins un premier réseau (16) supportant des sessions ayant un niveau élevé de contenu d'information :
une unité radio (40), agencée pour communiquer avec un premier réseau sur une première liaison dans une session vidéotéléphonique ayant un niveau élevé de contenu d'information, et un détecteur de circonstance de performances (40 ; 44) détectant une circonstance de faibles performances pour la session,
**caractérisé par** une unité de commande (42) agencée afin de demander le transfert de la session de la première liaison à une seconde liaison utilisant un niveau inférieur de contenu d'information dans la session, afin que la session puisse se poursuivre sur la seconde liaison avec un niveau inférieur de contenu d'information à celui sur la première liaison, malgré la circonstance de faibles performances.

22. Dispositif portable de communication (10) selon la revendication 21, dans lequel la seconde liaison est fournie sur un second réseau sans fil (28) qui ne supporte que des sessions ayant un niveau inférieur de contenu d'information.

23. Dispositif portable de communication (10) selon la revendication 21 ou 22, comprenant en outre une unité de notification (36) et dans lequel l'unité de commande (42) est en outre agencée pour présenter via l'unité de notification des informations destinées à informer du transfert un utilisateur.

24. Dispositif portable de communication selon la revendication 23, comprenant en outre une unité d'entrée (38), dans lequel l'unité de commande (42) est agencée pour attendre une confirmation de l'utilisateur, via l'unité d'entrée, avant de demander le transfert.

25. Dispositif portable de communication (10) selon l'une quelconque des revendications 21 à 24, dans lequel le détecteur de circonstance de performances (40) détecte la mauvaise couverture de la première liaison et est implanté dans l'unité radio.

26. Dispositif portable de communication (10) selon l'une quelconque des revendications 21 à 25, dans lequel dans lequel le détecteur de circonstance de performances détecte également une situation de performances élevées pour une liaison sur le premier réseau et l'unité de commande (42) est en outre agencée pour demander le transfert vers cette liaison après la détection de la situation de performances élevées.

27. Dispositif portable de communication selon l'une quelconque des revendications 21 à 25, comprenant en outre une batterie (48) et dans lequel le détecteur de circonstance de performances (44) est agencé pour détecter un faible niveau de batterie et le rapporter à l'unité de commande.
